(19) Europäisches Patentamt
European Patent Office
Office européen des brevets

(11) **EP 3 512 117 A1**

(12) **EUROPEAN PATENT APPLICATION**

(43) Date of publication:
**17.07.2019 Bulletin 2019/29**

(51) Int Cl.:
**H04B 7/06** *(2006.01)* **H01Q 21/20** *(2006.01)*

(21) Application number: **18151202.1**

(22) Date of filing: **11.01.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(71) Applicant: **Deutsche Telekom AG
53113 Bonn (DE)**

(72) Inventor: **Wannemacher, Georg
66386 St. Ingbert (DE)**

(74) Representative: **Patentship
Patentanwaltsgesellschaft mbH
Elsenheimerstraße 65
80687 München (DE)**

(54) **A BEAMFORMING ANTENNA SYSTEM COMPRISING A CONICAL BEAMFORMING ANTENNA**

(57) The invention relates to a beamforming antenna system (100). The beamforming antenna system (100) comprises a conical beamforming antenna (101) having a conical surface tilted in an upward direction and an array (102) of antenna elements. The beamforming antenna system (100) further comprises a driving circuit (103) being configured to drive a subarray of the array (102) of antenna elements to generate a spatially directed transmission beam. The driving circuit (103) comprises a storage (105) being configured to store reference phase shift values for generating spatially directed transmission beams using a planar beamforming antenna. The driving circuit (103) further comprises a processor (107) being configured to select a subset of the pre-stored reference phase shift values, to adapt the selected subset of pre-stored reference phase shift values to the conical distribution of the array (102) of antenna elements of the conical beamforming antenna (101) to obtain adapted phase shift values, and to drive the subarray of the array (102) of antenna elements of the conical beamforming antenna (101) using the adapted phase shift values to generate the spatially directed transmission beam.

Fig. 1a

EP 3 512 117 A1

**Description**

TECHNICAL FIELD

The present invention relates to the field of beamforming antennas, in particular for base stations communicating with flying drones.

TECHNICAL BACKGROUND

Fifth-generation (5G) mobile communication networks are assumed to use planar beamforming antennas for massive multiple-input multiple-output (MIMO) communication, wherein such planar beamforming antennas may e.g. comprise 128 antenna elements for generating a spatially directed transmission beam. By applying phase shifts to a subarray of such antenna elements, the spatially directed transmission beam may be generated. The corresponding phase shift values may e.g. be defined by a code book, which may be standardized by 5G standardization bodies, such as the 3GPP.

When communicating with flying drones using the aforementioned technologies, the usage of planar beamforming antennas by a base station is, however, subject to restrictions since such planar beamforming antennas are usually arranged horizontally. Planar beamforming antennas may in fact be slightly tilted in an upward direction. However, due to the planar distribution of antenna elements, no complete coverage of the space above a base station may be realized. Therefore, multiple planar beamforming antennas usually have to be used for realizing a complete coverage.

SUMMARY

It is an object of the invention to provide a beamforming antenna system having a coverage angle of 360° which mitigates the aforementioned drawbacks.

This object is achieved by the features of the independent claims. Further implementation forms are apparent from the dependent claims, the description and the figures.

The invention is based on the finding that beamforming approaches for planar beamforming antennas may be adapted to conical beamforming antennas tilted in an upward direction by adapting respective reference phase shift values associated with a planar beamforming antenna to the conical distribution of antenna elements of a conical beamforming antenna.

The beamforming antenna system is particularly suited for base stations to be used for multiple-input multiple-output (MIMO) communication with a flying drone. Due to the conical surface of the conical beamforming antenna, which is tilted in the upward direction, communication with the flying drone may be facilitated.

According to a first aspect, the invention relates to a beamforming antenna system. The beamforming antenna system comprises a conical beamforming antenna having a conical surface tilted in an upward direction and an array of antenna elements being arranged along the conical surface. The beamforming antenna system further comprises a driving circuit being configured to drive a subarray of the array of antenna elements to generate a spatially directed transmission beam. The driving circuit comprises a storage being configured to store reference phase shift values for generating spatially directed transmission beams using a planar beamforming antenna having a planar distributed array of antenna elements. The driving circuit further comprises a processor being configured to select a subset of the pre-stored reference phase shift values for generating the spatially directed transmission beam, to adapt the selected subset of pre-stored reference phase shift values to the conical distribution of the array of antenna elements of the conical beamforming antenna to obtain adapted phase shift values, and to drive the subarray of the array of antenna elements of the conical beamforming antenna using the adapted phase shift values to generate the spatially directed transmission beam.

In an embodiment, the pre-stored reference phase shift values are part of a pre-stored code book, in particular a pre-stored planar code book, associated with the planar beamforming antenna. The pre-stored code book may be stored in the storage. The pre-stored code book, in particular the pre-stored planar code book, may be standardized by a 5G standardization body, such as the 3GPP. Thus, conformity with the 5G standard can be realized.

The pre-stored code book may e.g. indicate a respective pre-stored reference phase shift value for each respective antenna element of the planar beamforming antenna associated with a specific beam direction. The pre-stored code book may be represented in form of a look-up table. For an exemplary 4x2 planar beamforming antenna, the pre-stored code book may include for an exemplary beam direction to the front the following entries: [1,1] = -25°, [2,1] = -10°, [3,1] = +10°, [4,1] = +25°, [1,2] = -25°, [2,2] = -10°, [3,2] = +10°, and [4,2] = +25°.

In an embodiment, the processor is configured to perform a spatial coordinate transformation to adapt the selected subset of the pre-stored reference phase shift values to the conical distribution of the array of antenna elements of the conical beamforming antenna. Thus, spatial relationships can efficiently be exploited.

In an embodiment, the spatial coordinate transformation is a Cartesian-to-Conical coordinate transformation. Thus, spatial relationships between the planar distribution and the conical distribution can efficiently be exploited.

In an embodiment, the conical beamforming antenna is shaped as a frustrum of a cone, wherein the conical surface is an outer surface of the frustrum of the cone. Thus, the tilt in the upward direction can efficiently be realized.

In an embodiment, the driving circuit further comprises an array of phase shifters associated with the array of antenna elements of the conical beamforming antenna, wherein the processor is configured to control the array of phase shifters using the adapted phase shift values. Thus, the antenna elements can efficiently be driven.

In an embodiment, each antenna element of the array of antenna elements is a patch antenna. Thus, the antenna elements can efficiently be implemented.

In an embodiment, the antenna elements of the array of antenna elements are equally spaced along the conical surface. Thus, the adaption of the selected subset of pre-stored reference phase shift values to the conical distribution can efficiently be realized.

In an embodiment, the array of antenna elements is a phased array. Thus, the spatially directed transmission beam can efficiently be steered.

In an embodiment, the beamforming antenna system further comprises a cylindrical beamforming antenna having a cylindrical surface and a further array of further antenna elements being arranged along the cylindrical surface, and a further driving circuit being configured to drive a further subarray of the further array of further antenna elements to generate a further spatially directed transmission beam. The further driving circuit comprises a further storage being configured to store further reference phase shift values for generating further spatially directed transmission beams using a further planar beamforming antenna having a further planar distributed array of further antenna elements, and a further processor being configured to select a further subset of the further pre-stored reference phase shift values for generating the further spatially directed transmission beam, to adapt the selected further subset of the further pre-stored reference phase shift values to the cylindrical distribution of the further array of further antenna elements of the cylindrical beamforming antenna to obtain further adapted phase shift values, and to drive the further subarray of the further array of further antenna elements of the cylindrical beamforming antenna using the further adapted phase shift values to generate the further spatially directed transmission beam. The conical beamforming antenna is adjacent to the cylindrical beamforming antenna. Thus, a further spatially directed transmission beam can efficiently be provided.

In an embodiment, the further pre-stored reference phase shift values are part of a further pre-stored code book, in particular a further pre-stored planar code book, associated with the further planar beamforming antenna. The further pre-stored code book may be stored in the further storage. The further pre-stored code book, in particular the further pre-stored planar code book, may be standardized by a 5G standardization body, such as the 3GPP. Thus, conformity with the 5G standard can be realized.

The further pre-stored code book may e.g. indicate a respective further pre-stored reference phase shift value for each further respective antenna element of the further planar beamforming antenna associated with a further specific beam direction. The further pre-stored code book may be represented in form of a further look-up table. For an exemplary 4x2 further planar beamforming antenna, the further pre-stored code book may include for an exemplary further beam direction to the front the following entries: [1,1 = -35°, [2,1] = -15°, [3,1] = +15°, [4,1] = +35°, [1,2] = -35°, [2,2] = -15°, [3,2] = +15°, and [4,2] = +35°.

In an embodiment, the further processor is configured to perform a further spatial coordinate transformation to adapt the selected further subset of the further pre-stored reference phase shift values to the cylindrical distribution of the further array of further antenna elements of the cylindrical beamforming antenna. Thus, spatial relationships can efficiently be exploited.

In an embodiment, the further spatial coordinate transformation is a Cartesian-to-Cylindrical coordinate transformation. Thus, spatial relationships between the planar distribution and the cylindrical distribution can efficiently be exploited.

In an embodiment, the further driving circuit further comprises a further array of further phase shifters associated with the further array of further antenna elements of the cylindrical beamforming antenna, wherein the further processor is configured to control the further array of further phase shifters using the further adapted phase shift values. Thus, the further antenna elements can efficiently be driven.

In an embodiment, each further antenna element of the further array of further antenna elements is a patch antenna. Thus, the further antenna elements can efficiently be implemented.

In an embodiment, the further antenna elements of the further array of further antenna elements are equally spaced along the cylindrical surface. Thus, the adaption of the selected further subset of further pre-stored reference phase shift values to the cylindrical distribution can efficiently be realized.

In an embodiment, the further array of further antenna elements is a further phased array. Thus, the further spatially directed transmission beam can efficiently be steered.

According to a second aspect, the invention relates to a base station for communicating with a flying drone. The base station comprises the beamforming antenna system according to the first aspect of the invention, wherein the base station is configured to communicate with the flying drone via the spatially directed transmission beam of the beamforming antenna system.

According to a third aspect, the invention relates to a method for operating a beamforming antenna system. The beamforming antenna system comprises a conical beamforming antenna, and a driving circuit comprising a storage and a processor. The conical beamforming antenna has a conical surface tilted in an upward direction and an array of antenna elements being arranged along the conical surface. The driving circuit is configured to drive a subarray of the array of antenna elements to generate a spatially directed transmission beam. The storage is configured to store reference phase shift values for generating spatially directed transmission beams using a planar beamforming antenna having a planar distributed array of antenna elements. The method comprises selecting, by the processor, a subset of the pre-stored reference phase shift values for generating the spatially directed transmission beam, adapting, by the processor, the selected subset of pre-stored reference phase shift values to the conical distribution of the array of antenna elements of the conical beamforming antenna to obtain adapted phase shift values, and driving, by the processor, the subarray of the array of antenna elements of the conical beamforming antenna using the adapted phase shift values to generate the spatially directed transmission beam.

The method may be performed by the beamforming antenna system. Further features of the method may directly result from the features and/or the functionality of the beamforming antenna system.

According to a fourth aspect, the invention relates to a computer program comprising a program code for performing the method according to the third aspect of the invention, when executed by a processor and/or a further processor.

The invention can be implemented in hardware and/or software.

BRIEF DESCRIPTION OF THE FIGURES

Further embodiments of the invention will be described with respect to the following figures, in which:

Fig. 1a    shows a schematic diagram of a beamforming antenna system;

Fig. 1b    shows a schematic diagram of a beamforming antenna system;

Fig. 1c    shows a schematic diagram of a beamforming antenna system;

Fig. 1d    shows a schematic diagram of a beamforming antenna system;

Fig. 1e    shows a schematic diagram of a beamforming antenna system;

Fig. 1f    shows a schematic diagram of a conical beamforming antenna and a further conical beamforming antenna;

Fig. 2    shows a schematic diagram of a base station; and

Fig. 3    shows a schematic diagram of a method for operating a beamforming antenna system.

DETAILED DESCRIPTION OF THE FIGURES

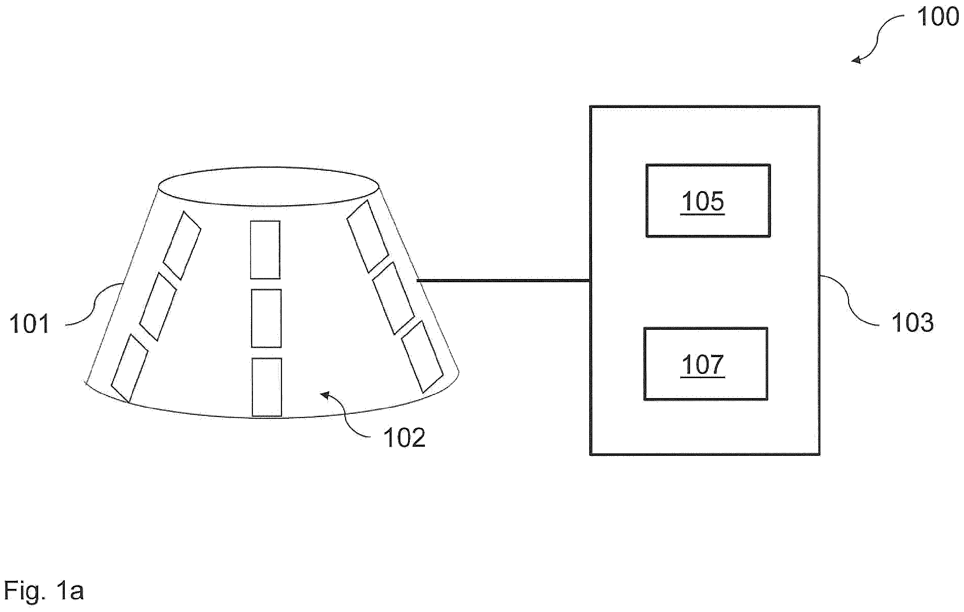

Fig. 1a shows a schematic diagram of a beamforming antenna system 100. The beamforming antenna system 100 comprises a conical beamforming antenna 101 having a conical surface tilted in an upward direction and an array 102 of antenna elements being arranged along the conical surface. The beamforming antenna system 100 further comprises a driving circuit 103 being configured to drive a subarray of the array 102 of antenna elements to generate a spatially directed transmission beam. The driving circuit 103 comprises a storage 105 being configured to store reference phase shift values for generating spatially directed transmission beams using a planar beamforming antenna having a planar distributed array of antenna elements. The driving circuit 103 further comprises a processor 107 being configured to select a subset of the pre-stored reference phase shift values for generating the spatially directed transmission beam, to adapt the selected subset of pre-stored reference phase shift values to the conical distribution of the array 102 of antenna elements of the conical beamforming antenna 101 to obtain adapted phase shift values, and to drive the subarray of the array 102 of antenna elements of the conical beamforming antenna 101 using the adapted phase shift values to generate the spatially directed transmission beam.

The conical beamforming antenna 101 is shaped as a frustrum of a cone, and the conical surface is an outer surface of the frustrum of the cone. The conical beamforming antenna 101 allows for a coverage angle of 360°. At the same time, due to the tilted conical surface of the conical beamforming antenna 101, a vertical orientation of the spatially directed transmission beam can be realized.

In an alternative arrangement of the conical beamforming antenna 101, the conical surface is not tilted in an upward direction but in a downward direction. The conical beamforming antenna 101 may be turned upside-down in this case.

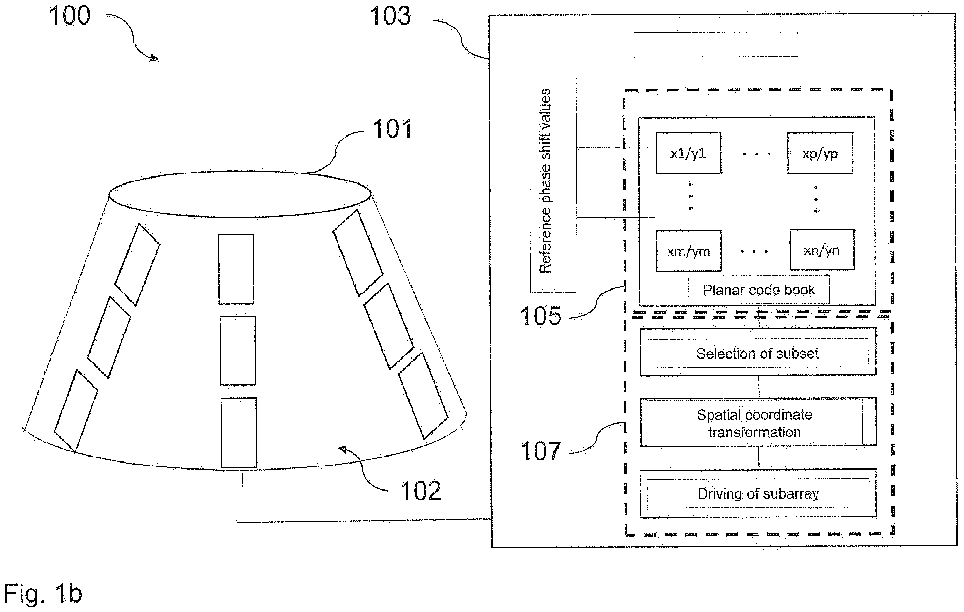

Fig. 1b shows a schematic diagram of a beamforming antenna system 100. The beamforming antenna system 100 comprises a conical beamforming antenna 101 having a conical surface tilted in an upward direction and an array 102 of antenna elements being arranged along the conical surface. The beamforming antenna system 100 further comprises a driving circuit 103 being configured to drive a subarray of the array 102 of antenna elements to generate a spatially directed transmission beam. The driving circuit 103 comprises a storage 105 being configured to store reference phase shift values for generating spatially directed transmission beams using a planar beamforming antenna having a planar distributed array of antenna elements. The driving circuit 103 further comprises a processor 107 being configured to select a subset of the pre-stored reference phase shift values for generating the spatially directed transmission beam, to adapt the selected subset of pre-stored reference phase shift values to the conical distribution of the array 102 of antenna elements of the conical beamforming antenna 101 to obtain adapted phase shift values, and to drive the subarray of the array 102 of antenna elements of the conical beamforming antenna 101 using the adapted phase shift values to generate the spatially directed transmission beam. The pre-stored reference phase shift values are part of a pre-stored code book associated with the planar beamforming antenna. The pre-stored code book is stored in the storage 105.

The pre-stored reference phase shift values within the pre-stored code book are adapted to the conical distribution of antenna elements of the conical beamforming antenna 101. For generating an exemplary spatially directed transmission beam corresponding to an angle of 45° to the left and 10° to the top of a planar distribution, the antenna elements of the conical beamforming antenna 101 may be driven such that the spatially directed transmission beam at the angle of 45° to the left and 10° to the top is generated. Regarding the conical distribution of antenna elements, only the antenna elements may e.g. be driven which are already substantially arranged or directed towards the desired direction of the spatially directed transmission beam.

The adapted phase shift values are therefore different with regard to the reference phase shift values. Furthermore, the coverage angle of each individual antenna element may be increased. This may allow using simpler antenna elements such as patch antennas.

The processor 107 is configured to perform a spatial coordinate transformation, in particular a Cartesian-to-Conical coordinate transformation, to adapt the selected subset of the pre-stored reference phase shift values to the conical distribution of the array 102 of antenna elements of the conical beamforming antenna 101.

The spatial coordinate transformation may be based on the following relationships:

$$x = \frac{r\mu\nu}{bc}$$

$$y = \frac{r}{b}\sqrt{\frac{(\mu^2 - b^2)(\nu^2 - b^2)}{(b^2 - c^2)}}$$

$$z = \frac{r}{c}\sqrt{\frac{(\mu^2 - c^2)(\nu^2 - c^2)}{(c^2 - b^2)}}$$

The spatial coordinate transformation may thus map the planar code book associated with a planar beamforming antenna using Cartesian coordinates onto conical coordinates.

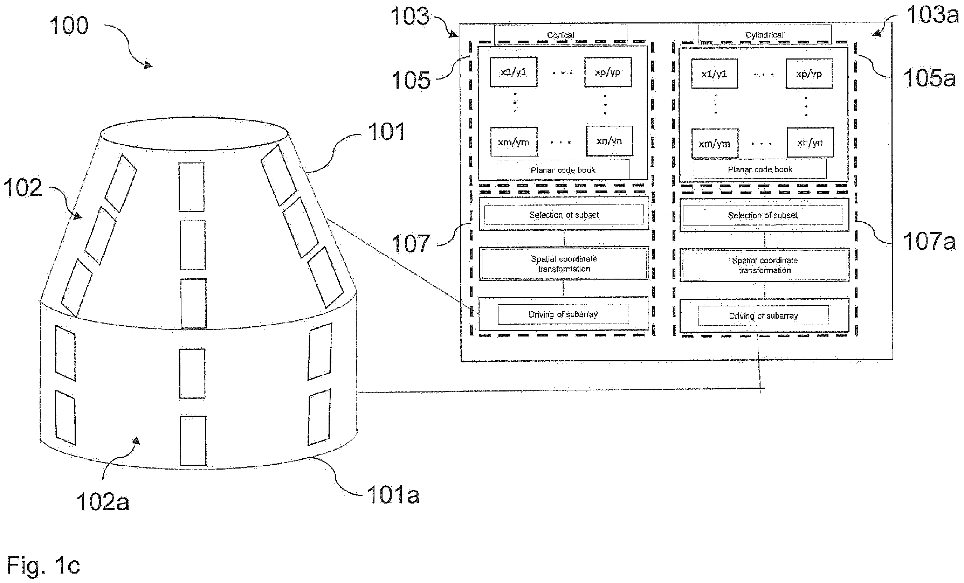

Fig. 1c shows a schematic diagram of a beamforming antenna system 100. A conical beamforming antenna 101 is adjacent to a cylindrical beamforming antenna 101 a.

The beamforming antenna system 100 comprises the conical beamforming antenna 101 having a conical surface tilted in an upward direction and an array 102 of antenna elements being arranged along the conical surface. The beamforming antenna system 100 further comprises a driving circuit 103 being configured to drive a subarray of the array 102 of antenna elements to generate a spatially directed transmission beam. The driving circuit 103 comprises a storage 105 being configured to store reference phase shift values for generating spatially directed transmission beams using a planar beamforming antenna having a planar distributed array of antenna elements. The driving circuit 103 further comprises a processor 107 being configured to select a subset of the pre-stored reference phase shift values for generating the spatially directed transmission beam, to adapt the selected subset of pre-stored reference phase shift values to the conical distribution of the array 102 of antenna elements of the conical beamforming antenna 101 to obtain adapted phase shift values, and to drive the subarray of the array 102 of antenna elements of the conical beamforming antenna 101 using the adapted phase shift values to generate the spatially directed transmission beam. The pre-stored reference phase shift values are part of a pre-stored code book associated with the planar beamforming antenna. The pre-stored code book is stored in the storage 105.

The pre-stored reference phase shift values within the pre-stored code book are adapted to the conical distribution of antenna elements of the conical beamforming antenna 101. For generating an exemplary spatially directed transmission beam corresponding to an angle of 45° to the left and 10° to the top of a planar distribution, the antenna elements of the conical beamforming antenna 101 may be driven such that the spatially directed transmission beam at the angle of 45° to the left and 10° to the top is generated. Regarding the conical distribution of antenna elements, only the antenna elements may e.g. be driven which are already substantially arranged or directed towards the desired direction of the spatially directed transmission beam.

The adapted phase shift values are therefore different with regard to the reference phase shift values. Furthermore, the coverage angle of each individual antenna element may be increased. This may allow using simpler antenna elements such as patch antennas.

The processor 107 is configured to perform a spatial coordinate transformation, in particular a Cartesian-to-Conical coordinate transformation, to adapt the selected subset of the pre-stored reference phase shift values to the conical distribution of the array 102 of antenna elements of the conical beamforming antenna 101.

The spatial coordinate transformation may be based on the following relationships:

$$x = \frac{r\mu\nu}{bc}$$

$$y = \frac{r}{b} \sqrt{\frac{(\mu^2 - b^2)(\nu^2 - b^2)}{(b^2 - c^2)}}$$

$$z = \frac{r}{c} \sqrt{\frac{(\mu^2 - c^2)(\nu^2 - c^2)}{(c^2 - b^2)}}$$

The spatial coordinate transformation may thus map the planar code book associated with a planar beamforming antenna using Cartesian coordinates onto conical coordinates.

The beamforming antenna system 100 further comprises the cylindrical beamforming antenna 101 a having a cylindrical surface and a further array 102a of further antenna elements being arranged along the cylindrical surface. The beamforming antenna system 100 further comprises a further driving circuit 103a being configured to drive a further subarray of the further array 102a of further antenna elements to generate a further spatially directed transmission beam. The further driving circuit 103a comprises a further storage 105a being configured to store further reference phase shift values for generating further spatially directed transmission beams using a further planar beamforming antenna having a further planar distributed array of further antenna elements. The further driving circuit 103a further comprises a further processor 107a being configured to select a further subset of the further pre-stored reference phase shift values for generating the further spatially directed transmission beam, to adapt the selected further subset of the further pre-stored reference phase shift values to the cylindrical distribution of the further array 102a of further antenna elements of the cylindrical beamforming antenna 101 a to obtain further adapted phase shift values, and to drive the further subarray of the further array 102a of further antenna elements of the cylindrical beamforming antenna 101 a using the further adapted phase shift values to generate the further spatially directed transmission beam. The further pre-stored reference phase shift values are part of a further pre-stored code book associated with the further planar beamforming antenna. The further pre-stored code book is stored in the further storage 105a.

The further pre-stored reference phase shift values within the further pre-stored code book are adapted to the cylindrical distribution of further antenna elements of the cylindrical beamforming antenna 101 a. For generating an exemplary further spatially directed transmission beam corresponding to an angle of 55° to the right of a planar distribution, the further antenna elements of the cylindrical beamforming antenna 101 a may be driven such that the further spatially directed transmission beam at the angle of 55° to the right is generated. Regarding the cylindrical distribution of further antenna elements, only the further antenna elements may e.g. be driven which are already substantially arranged or directed towards the desired direction of the further spatially directed transmission beam.

The further adapted phase shift values are therefore different with regard to the further reference phase shift values. Furthermore, the coverage angle of each individual further antenna element may be increased. This may allow using simpler further antenna elements such as patch antennas.

The further processor 107a is configured to perform a further spatial coordinate transformation, in particular a Cartesian-to-Cylindrical coordinate transformation, to adapt the selected further subset of the further pre-stored reference phase shift values to the cylindrical distribution of the further array 102a of further antenna elements of the cylindrical beamforming antenna 101a.

The further spatial coordinate transformation may be based on the following relationships:

$$x = r \cos \varphi,$$

$$y = r \sin \varphi$$

$$z = h$$

The further spatial coordinate transformation may thus map the further planar code book associated with a further planar beamforming antenna using Cartesian coordinates onto cylindrical coordinates.

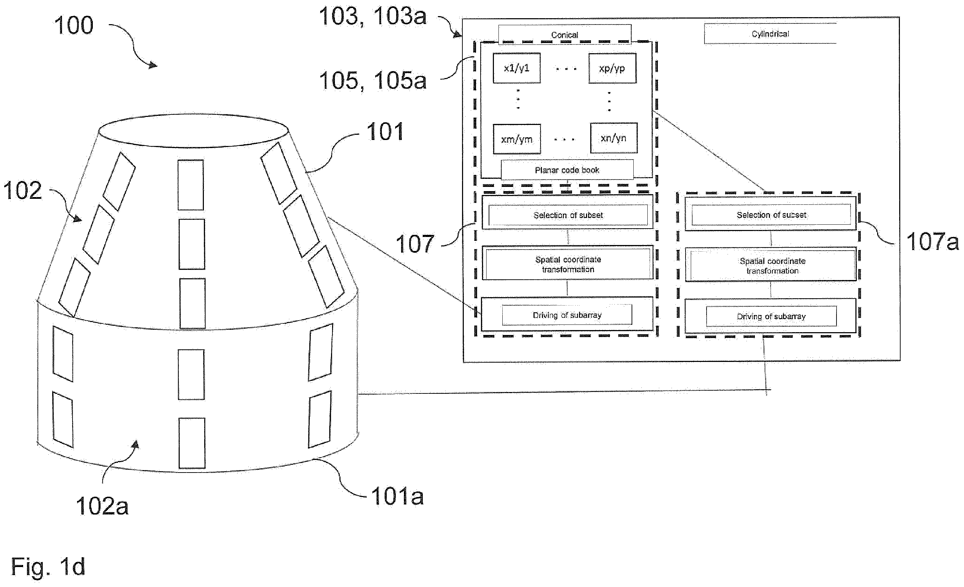

Fig. 1d shows a schematic diagram of a beamforming antenna system 100. A conical beamforming antenna 101 is adjacent to a cylindrical beamforming antenna 101 a.

The beamforming antenna system 100 comprises the conical beamforming antenna 101 having a conical surface tilted in an upward direction and an array 102 of antenna elements being arranged along the conical surface. The beamforming antenna system 100 further comprises a driving circuit 103 being configured to drive a subarray of the array 102 of antenna elements to generate a spatially directed transmission beam. The driving circuit 103 comprises a storage 105 being configured to store reference phase shift values for generating spatially directed transmission beams using a planar beamforming antenna having a planar distributed array of antenna elements. The driving circuit 103 further comprises a processor 107 being configured to select a subset of the pre-stored reference phase shift values for generating the spatially directed transmission beam, to adapt the selected subset of pre-stored reference phase shift values to the conical distribution of the array 102 of antenna elements of the conical beamforming antenna 101 to obtain adapted phase shift values, and to drive the subarray of the array 102 of antenna elements of the conical beamforming antenna 101 using the adapted phase shift values to generate the spatially directed transmission beam. The pre-stored reference phase shift values are part of a pre-stored code book associated with the planar beamforming antenna. The pre-stored code book is stored in the storage 105.

The processor 107 is configured to perform a spatial coordinate transformation, in particular a Cartesian-to-Conical coordinate transformation, to adapt the selected subset of the pre-stored reference phase shift values to the conical distribution of the array 102 of antenna elements of the conical beamforming antenna 101.

The beamforming antenna system 100 further comprises the cylindrical beamforming antenna 101 a having a cylindrical surface and a further array 102a of further antenna elements being arranged along the cylindrical surface. The beamforming antenna system 100 further comprises a further driving circuit 103a being configured to drive a further subarray of the further array 102a of further antenna elements to generate a further spatially directed transmission beam. The further driving circuit 103a comprises a further storage 105a being configured to store further reference phase shift values for generating further spatially directed transmission beams using a further planar beamforming antenna having a further planar distributed array of further antenna elements. The further driving circuit 103a further comprises a further processor 107a being configured to select a further subset of the further pre-stored reference phase shift values for generating the further spatially directed transmission beam, to adapt the selected further subset of the further pre-stored reference phase shift values to the cylindrical distribution of the further array 102a of further antenna elements of the cylindrical beamforming antenna 101 a to obtain further adapted phase shift values, and to drive the further subarray of the further array 102a of further antenna elements of the cylindrical beamforming antenna 101 a using the further adapted phase shift values to generate the further spatially directed transmission beam. The further pre-stored reference phase shift values are part of a further pre-stored code book associated with the further planar beamforming antenna. The further pre-stored code book is stored in the further storage 105a.

The further processor 107a is configured to perform a further spatial coordinate transformation, in particular a Cartesian-to-Cylindrical coordinate transformation, to adapt the selected further subset of the further pre-stored reference phase shift values to the cylindrical distribution of the further array 102a of further antenna elements of the cylindrical beamforming antenna 101a.

The storage 103 and the further storage 103a may form a single common storage. In particular, the pre-stored code book and the further pre-stored code book may be stored in the single common storage.

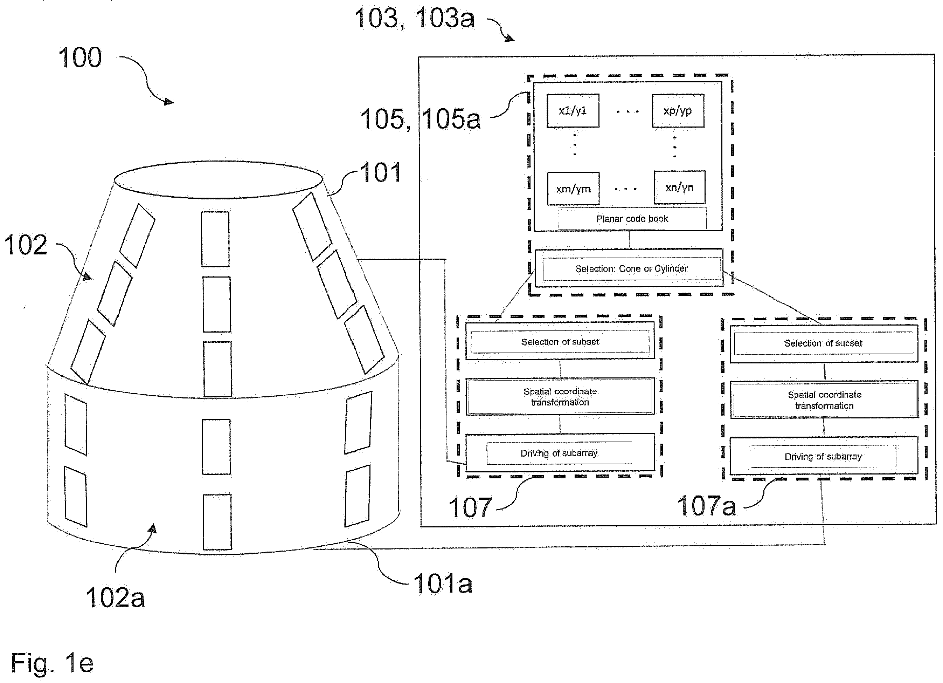

Fig. 1e shows a schematic diagram of a beamforming antenna system 100. A conical beamforming antenna 101 is adjacent to a cylindrical beamforming antenna 101 a.

The beamforming antenna system 100 comprises the conical beamforming antenna 101 having a conical surface tilted in an upward direction and an array 102 of antenna elements being arranged along the conical surface. The beamforming antenna system 100 further comprises a driving circuit 103 being configured to drive a subarray of the array 102 of antenna elements to generate a spatially directed transmission beam. The driving circuit 103 comprises a storage 105 being configured to store reference phase shift values for generating spatially directed transmission beams using a planar beamforming antenna having a planar distributed array of antenna elements. The driving circuit 103 further comprises a processor 107 being configured to select a subset of the pre-stored reference phase shift values for generating the spatially directed transmission beam, to adapt the selected subset of pre-stored reference phase shift values to the conical distribution of the array 102 of antenna elements of the conical beamforming antenna 101 to obtain adapted phase shift values, and to drive the subarray of the array 102 of antenna elements of the conical beamforming antenna 101 using the adapted phase shift values to generate the spatially directed transmission beam. The pre-stored reference phase shift values are part of a pre-stored code book associated with the planar beamforming antenna. The pre-stored code book is stored in the storage 105.

The processor 107 is configured to perform a spatial coordinate transformation, in particular a Cartesian-to-Conical coordinate transformation, to adapt the selected subset of the pre-stored reference phase shift values to the conical distribution of the array 102 of antenna elements of the conical beamforming antenna 101.

The beamforming antenna system 100 further comprises the cylindrical beamforming antenna 101 a having a cylindrical surface and a further array 102a of further antenna elements being arranged along the cylindrical surface. The beamforming antenna system 100 further comprises a further driving circuit 103a being configured to drive a further subarray of the further array 102a of further antenna elements to generate a further spatially directed transmission beam. The further driving circuit 103a comprises a further storage 105a being configured to store further reference phase shift values for generating further spatially directed transmission beams using a further planar beamforming antenna having a further planar distributed array of further antenna elements. The further driving circuit 103a further comprises a further processor 107a being configured to select a further subset of the further pre-stored reference phase shift values for generating the further spatially directed transmission beam, to adapt the selected further subset of the further pre-stored reference phase shift values to the cylindrical distribution of the further array 102a of further antenna elements of the cylindrical beamforming antenna 101 a to obtain further adapted phase shift values, and to drive the further subarray of the further array 102a of further antenna elements of the cylindrical beamforming antenna 101 a using the further adapted phase shift values to generate the further spatially directed transmission beam. The further pre-stored reference phase shift values are part of a further pre-stored code book associated with the further planar beamforming antenna. The further pre-stored code book is stored in the further storage 105a.

The further processor 107a is configured to perform a further spatial coordinate transformation, in particular a Cartesian-to-Cylindrical coordinate transformation, to adapt the selected further subset of the further pre-stored reference phase shift values to the cylindrical distribution of the further array 102a of further antenna elements of the cylindrical beamforming antenna 101a.

The storage 103 and the further storage 103a may form a single common storage. In particular, the pre-stored code book and the further pre-stored code book may be stored in the single common storage. Within the single common storage, a selection between the pre-stored code book and the further pre-stored code book may be performed depending on the beamforming antenna 101, 101 a to be used. The driving circuit 103 and/or the further driving circuit 103a may perform the selection.

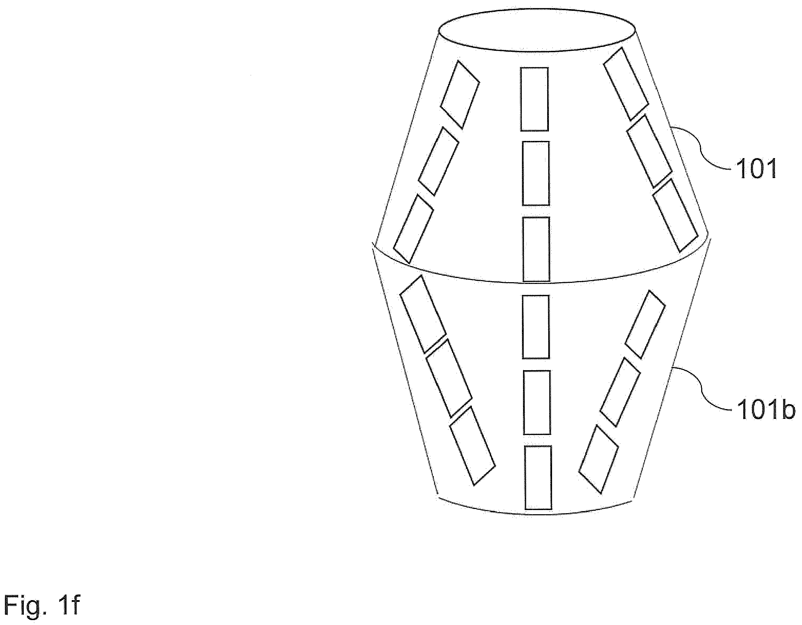

Fig. 1f shows a schematic diagram of a conical beamforming antenna 101 and a further conical beamforming antenna 101 b. The conical beamforming antenna 101 has a conical surface tilted in an upward direction. The further conical beamforming antenna 101 b has a further conical surface tilted in a downward direction.

The conical beamforming antenna 101 and the further conical beamforming antenna 101 b are adjacent. The conical beamforming antenna 101 and the further conical beamforming antenna 101 b form a doubled frustrum of a cone.

The conical beamforming antenna 101 and the further conical beamforming antenna 101 b may be driven separately or commonly as described with regard to the preceding figures.

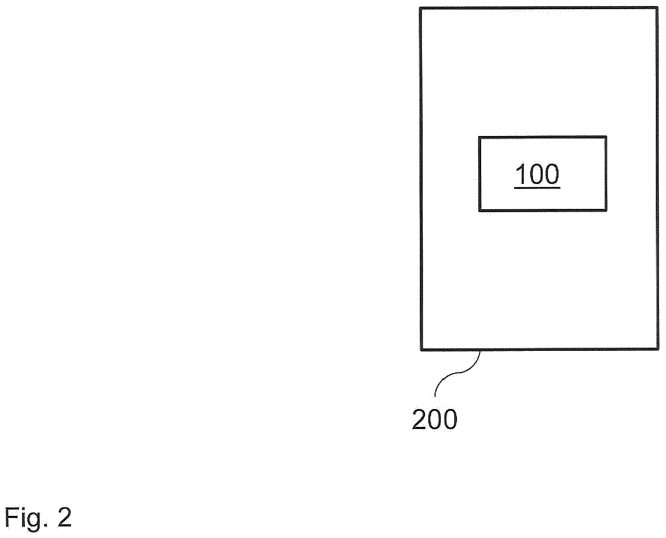

Fig. 2 shows a schematic diagram of a base station 200 for communicating with a flying drone. The base station 200 comprises the beamforming antenna system 100.

The base station 200 is configured to communicate with the flying drone via the spatially directed transmission beam of the beamforming antenna system 100.

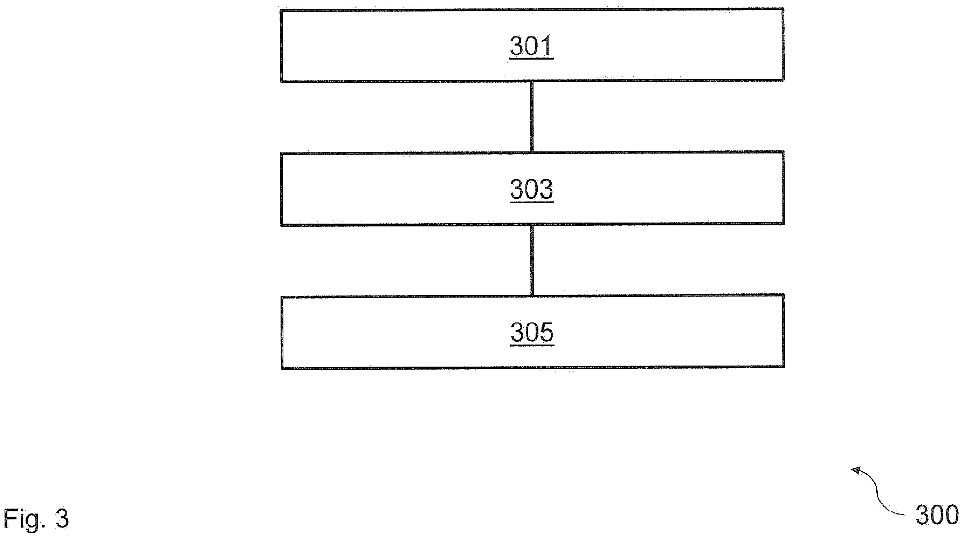

Fig. 3 shows a schematic diagram of a method 300 for operating a beamforming antenna system. The beamforming antenna system comprises a conical beamforming antenna, and a driving circuit comprising a storage and a processor. The conical beamforming antenna has a conical surface tilted in an upward direction and an array of antenna elements being arranged along the conical surface. The driving circuit is configured to drive a subarray of the array of antenna elements to generate a spatially directed transmission beam. The storage is configured to store reference phase shift values for generating spatially directed transmission beams using a planar beamforming antenna having a planar distributed array of antenna elements. The method 300 comprises selecting 301, by the processor, a subset of the pre-stored reference phase shift values for generating the spatially directed transmission beam, adapting 303, by the processor, the selected subset of pre-stored reference phase shift values to the conical distribution of the array of antenna elements of the conical beamforming antenna to obtain adapted phase shift values, and driving 305, by the processor, the subarray of the array of antenna elements of the conical beamforming antenna using the adapted phase shift values to generate the spatially directed transmission beam.

Although the present invention and its advantages have been described in detail, it should be understood that various changes, substitutions and alterations can be made herein without departing from the spirit and scope of the invention as defined by the appended claims.

REFERENCE SIGNS

| | |
|---|---|
| 100 | Beamforming antenna system |
| 101 | Conical beamforming antenna |
| 102 | Array of antenna elements |
| 103 | Driving circuit |
| 105 | Storage |
| 107 | Processor |
| | |
| 101a | Cylindrical beamforming antenna |
| 102a | Further array of further antenna elements |
| 103a | Further driving circuit |
| 105a | Further storage |
| 107a | Further processor |
| | |
| 101b | Further conical beamforming antenna |
| | |
| 200 | Base station |
| | |
| 300 | Method for operating a beamforming antenna system |
| 301 | Selecting |
| 303 | Adapting |
| 305 | Driving |

**Claims**

1. A beamforming antenna system (100), comprising:

a conical beamforming antenna (101) having a conical surface tilted in an upward direction and an array (102) of antenna elements being arranged along the conical surface;
a driving circuit (103) being configured to drive a subarray of the array (102) of antenna elements to generate a spatially directed transmission beam, wherein the driving circuit (103) comprises:

a storage (105) being configured to store reference phase shift values for generating spatially directed transmission beams using a planar beamforming antenna having a planar distributed array of antenna elements; and

a processor (107) being configured to select a subset of the pre-stored reference phase shift values for generating the spatially directed transmission beam, to adapt the selected subset of pre-stored reference phase shift values to the conical distribution of the array (102) of antenna elements of the conical beamforming antenna (101) to obtain adapted phase shift values, and to drive the subarray of the array (102) of antenna elements of the conical beamforming antenna (101) using the adapted phase shift values to generate the spatially directed transmission beam.

2. The beamforming antenna system (100) of claim 1, wherein the pre-stored reference phase shift values are part of a pre-stored code book, in particular a pre-stored planar code book, associated with the planar beamforming antenna.

3. The beamforming antenna system (100) of any one of the preceding claims, wherein the processor (107) is configured to perform a spatial coordinate transformation to adapt the selected subset of the pre-stored reference phase shift values to the conical distribution of the array (102) of antenna elements of the conical beamforming antenna (101).

4. The beamforming antenna system (100) of claim 3, wherein the spatial coordinate transformation is a Cartesian-to-Conical coordinate transformation.

5. The beamforming antenna system (100) of any one of the preceding claims, wherein the conical beamforming antenna (101) is shaped as a frustrum of a cone, and wherein the conical surface is an outer surface of the frustrum of the cone.

6. The beamforming antenna system (100) of any one of the preceding claims, wherein the driving circuit (103) further comprises:

an array of phase shifters associated with the array (102) of antenna elements of the conical beamforming antenna (101);

wherein the processor (107) is configured to control the array of phase shifters using the adapted phase shift values.

7. The beamforming antenna system (100) of any one of the preceding claims, wherein each antenna element of the array (102) of antenna elements is a patch antenna.

8. The beamforming antenna system (100) of any one of the preceding claims, wherein the antenna elements of the array (102) of antenna elements are equally spaced along the conical surface.

9. The beamforming antenna system (100) of any one of the preceding claims, further comprising:

a cylindrical beamforming antenna (101 a) having a cylindrical surface and a further array (102a) of further antenna elements being arranged along the cylindrical surface;

a further driving circuit (103a) being configured to drive a further subarray of the further array (102a) of further antenna elements to generate a further spatially directed transmission beam, wherein the further driving circuit (103a) comprises:

a further storage (105a) being configured to store further reference phase shift values for generating further spatially directed transmission beams using a further planar beamforming antenna having a further planar distributed array of further antenna elements; and

a further processor (107a) being configured to select a further subset of the further pre-stored reference phase shift values for generating the further spatially directed transmission beam, to adapt the selected further subset of the further pre-stored reference phase shift values to the cylindrical distribution of the further array (102a) of further antenna elements of the cylindrical beamforming antenna (101 a) to obtain further adapted phase shift values, and to drive the further subarray of the further array (102a) of further antenna elements of the cylindrical beamforming antenna (101 a) using the further adapted phase shift values to generate the further spatially directed transmission beam;

wherein the conical beamforming antenna (101) is adjacent to the cylindrical beamforming antenna (101a).

10. The beamforming antenna system (100) of claim 9, wherein the further driving circuit (103a) further comprises:

a further array of further phase shifters associated with the further array (102a) of further antenna elements of the cylindrical beamforming antenna (101 a);

wherein the further processor (107a) is configured to control the further array of further phase shifters using the further adapted phase shift values.

11. The beamforming antenna system (100) of any one of the claims 9 or 10, wherein each further antenna element of the further array (102a) of further antenna elements is a patch antenna.

12. The beamforming antenna system (100) of any one of the claims 9 to 11, wherein the further antenna elements of the further array (102a) of further antenna elements are equally spaced along the cylindrical surface.

13. A base station (200) for communicating with a flying drone, the base station (200) comprising:

the beamforming antenna system (100) of any one of the claims 1 to 12;
wherein the base station (200) is configured to communicate with the flying drone via the spatially directed transmission beam of the beamforming antenna system (100).

14. A method (300) for operating a beamforming antenna system (100), the beamforming antenna system (100) comprising a conical beamforming antenna (101), and a driving circuit (103) comprising a storage (105) and a processor (107), the conical beamforming antenna (101) having a conical surface tilted in an upward direction and an array (102) of antenna elements being arranged along the conical surface, the driving circuit (103) being configured to drive a subarray of the array (102) of antenna elements to generate a spatially directed transmission beam, the storage (105) being configured to store reference phase shift values for generating spatially directed transmission beams using a planar beamforming antenna having a planar distributed array of antenna elements, the method (300) comprising:

selecting (301), by the processor (107), a subset of the pre-stored reference phase shift values for generating the spatially directed transmission beam;
adapting (303), by the processor (107), the selected subset of pre-stored reference phase shift values to the conical distribution of the array (102) of antenna elements of the conical beamforming antenna (101) to obtain adapted phase shift values; and
driving (305), by the processor (107), the subarray of the array (102) of antenna elements of the conical beamforming antenna (101) using the adapted phase shift values to generate the spatially directed transmission beam.

15. A computer program comprising a program code for performing the method (300) of claim 14, when executed by a processor (107).

Fig. 1a

EP 3 512 117 A1

Fig. 1b

Fig. 1c

Conical

| x1/y1 | · · · | xp/yp |
| --- | --- | --- |
| ⋮ | | ⋮ |
| xm/ym | · · · | xn/yn |

Planar code book

Selection of subset

Spatial coordinate transformation

Driving of subarray

Cylindrical

| x1/y1 | · · · | xp/yp |
| --- | --- | --- |
| ⋮ | | ⋮ |
| xm/ym | · · · | xn/yn |

Planar code book

Selection of subset

Spatial coordinate transformation

Driving of subarray

Fig. 1d

**100**

**103, 103a**

**105, 105a**

**101**

**102**

**107**

**107a**

**101a**

**102a**

Conical

Cylindrical

x1/y1 · · · xp/yp

xm/ym · · · xn/yn

Planar code book

Selection of subset

Selection of subset

Spatial coordinate transformation

Spatial coordinate transformation

Driving of subarray

Driving of subarray

Fig. 1e

101

101b

Fig. 1f

100

200

Fig. 2

Fig. 3

300

Europäisches
Patentamt

European
Patent Office

Office européen
des brevets

# EUROPEAN SEARCH REPORT

**Application Number**

EP 18 15 1202

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2003/095067 A1 (HOWELL JAMES M [US]) 22 May 2003 (2003-05-22) <br> * title * <br> * figures 4C-4D * <br> * figure 3 * <br> * figures 14, 27-28 * <br> * figure 25 * <br> * paragraph [0068] * <br> * paragraph [0129] * <br> * paragraph [0059] - paragraph [0060] * <br> ----- | 1-15 | INV. <br> H04B7/06 <br> H01Q21/20 |
| Y | US 5 463 656 A (POLIVKA ALAN L [US] ET AL) 31 October 1995 (1995-10-31) <br> * figures 5-6 * <br> * column 12, line 22 - line 42 * <br> * column 8, line 52 * <br> ----- | 1-15 | |
| A | US 2012/133549 A1 (CULKIN DANIEL R [US] ET AL) 31 May 2012 (2012-05-31) <br> * figures 8-10 * <br> ----- | 1-15 | |
| | | | **TECHNICAL FIELDS SEARCHED (IPC)** <br> H04B <br> H01Q |

The present search report has been drawn up for all claims

| Place of search | Date of completion of the search | Examiner |
|---|---|---|
| Munich | 12 July 2018 | Chehade, Thomas |

EPO FORM 1503 03.82 (P04C01)

## ANNEX TO THE EUROPEAN SEARCH REPORT
## ON EUROPEAN PATENT APPLICATION NO.

EP 18 15 1202

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2018

| Patent document cited in search report | Publication date | Patent family member(s) | Publication date |
|---|---|---|---|
| US 2003095067 A1 | 22-05-2003 | AT 336089 T<br>CA 2466655 A1<br>EP 1442498 A1<br>US 2003095067 A1<br>WO 03043125 A1 | 15-09-2006<br>22-05-2003<br>04-08-2004<br>22-05-2003<br>22-05-2003 |
| US 5463656 A | 31-10-1995 | NONE | |
| US 2012133549 A1 | 31-05-2012 | AU 2011336905 A1<br>CA 2823144 A1<br>GB 2502708 A<br>GB 2520868 A<br>US 2012133549 A1<br>US 2013335269 A1<br>WO 2012074892 A1 | 11-07-2013<br>07-06-2012<br>04-12-2013<br>03-06-2015<br>31-05-2012<br>19-12-2013<br>07-06-2012 |

For more details about this annex : see Official Journal of the European Patent Office, No. 12/82